Europäisches Patentamt

European Patent Office

Office européen des brevets

(19)

(11) Veröffentlichungsnummer: **0 628 134 B1**

(12) **EUROPÄISCHE PATENTSCHRIFT**

(45) Veröffentlichungstag der Patentschrift: **13.09.95**

(51) Int. Cl.⁶: **F01N 3/20**

(21) Anmeldenummer: **92905125.8**

(22) Anmeldetag: **24.02.92**

(86) Internationale Anmeldenummer:
**PCT/EP92/00388**

(87) Internationale Veröffentlichungsnummer:
**WO 93/17228 (02.09.93 93/21)**

(54) **VERFAHREN UND VORRICHTUNG ZUM BETRIEB EINES ELEKTRISCH BEHEIZBAREN KATALYTISCHEN KONVERTERS.**

(43) Veröffentlichungstag der Anmeldung:
**14.12.94 Patentblatt 94/50**

(45) Bekanntmachung des Hinweises auf die Patenterteilung:
**13.09.95 Patentblatt 95/37**

(84) Benannte Vertragsstaaten:
**DE ES FR GB IT SE**

(56) Entgegenhaltungen:
**EP-A- 0 456 919**
**AT-B- 393 538**

**PATENT ABSTRACTS OF JAPAN vol. 010, no. 299 (M-524) 11. Oktober 1986 & JP-A-61 112 715 (TOYOTA MOTOR CORP) 30. Mai 1986**

(73) Patentinhaber: **Emitec Gesellschaft für Emissionstechnologie mbH**
**Hauptstrasse 150**
**D-53797 Lohmar (DE)**

(72) Erfinder: **Brück, Rolf**
**Fröbelstrasse 12**
**D-5060 Bergisch Gladbach 1 (DE)**
Erfinder: **Swars, Helmut**
**Riedweg 11**
**D-5060 Bergisch Gladbach 1 (DE)**

(74) Vertreter: **Kahlhöfer, Hermann Bardehle-Pagenberg-Dost-Altenburg-Frohwitter-Geissler & Partner Patent- und Rechtsanwälte et al**
**Xantener Strasse 12**
**D-40474 Düsseldorf (DE)**

EP 0 628 134 B1

## Beschreibung

Die vorliegende Erfindung betrifft ein Verfahren zum Betrieb eines elektrisch beheizbaren katalytischen Konverters, der geregelt von einem Elektronikbaustein mit einem elektrischen Strom beaufschlagbar ist, wobei der Konverter auf eine für die katalytische Umsetzung erforderliche Mindesttemperatur gebracht und/oder oberhalb dieser Temperatur gehalten werden soll.

Ebenso betrifft die Erfindung eine entsprechende Vorrichtung. Elektrisch beheizbare katalytische Konverter werden insbesondere bei Kraftfahrzeugen zur Einhaltung besonders strenger Abgasvorschriften eingesetzt. In der Regel sind sie einem Hauptkonverter vorgeschaltet.

Bei Verbrennungsmotoren entstehen besonders viele Schadstoffe in der Kaltstartphase, d. h. in den ersten Minuten des Betriebes, bevor der Verbrennungsmotor seine Betriebstemperatur erreicht. Gerade in dieser Phase können die entstehenden Schadstoffe in katalytischen Konvertern noch nicht gut umgesetzt werden, da diese Konverter ihre Betriebstemperatur ebenfalls noch nicht erreicht haben.

Aus der WO 89/10470 und der WO 89/10471 sind zur Abhilfe elektrisch beheizbare katalytische Konverter und Verfahren zu ihrem Betrieb bekannt. Solche Konverter werden mit einem verhältnismäßig hohen Strom innerhalb einer verhältnismäßig kurzen Zeit auf die für den Ablauf katalytischer Reaktionen notwendige Temperatur aufgeheizt, so daß ein erheblicher Teil der in der Kaltstartphase entstehenden Schadstoffe umgesetzt werden kann. Dabei können die beheizbaren Konverter entweder schon vor dem Starten des Verbrennungsmotors auf Betriebstemperatur aufgeheizt werden, oder unmittelbar nach dem Start. Auch eine Kombination dieser Möglichkeiten ist bekannt.

Der hohe Energieverbrauch von elektrisch beheizbaren Konvertern und die für deren schnelle Aufheizung benötigten Stromstärken machen einen solchen Konverter zu einem untypischen Stromverbraucher in einem Kraftfahrzeug, welcher mit besonderen Mitteln elektronisch geregelt und elektrisch geschaltet werden muß. Dabei sind zwei gegenläufige Interessen zu berücksichtigen. Einerseits soll zur Einhaltung von Abgasvorschriften sichergestellt werden, daß der elektrisch beheizbare katalytische Konverter seine Aufgabe bei jedem Start des Verbrennungsmotors zuverlässig erfüllt, andererseits soll die Verfügbarkeit eines Kraftfahrzeuges nicht durch diese Komponente beeinträchtigt werden, was bei Störungen im beheizbaren Konverter ohne Zusatzmaßnahmen denkbar wäre. Auch muß natürlich die Feuersicherheit eines Kraftfahrzeuges gewährleistet und die Beschädigung der Abgasreinigungsanlage selbst sicher vermieden werden.

Aufgabe der vorliegenden Erfindung ist daher die Schaffung eines Verfahrens zum Betrieb eines elektrisch beheizbaren katalytischen Konverters und einer entsprechenden Vorrichtung, bei denen eine maximale Betriebssicherheit des Konverters selbst ohne Beeinträchtigung der Verfügbarkeit des Kraftfahrzeuges erreicht wird.

Zur Lösung dieser Aufgabe dient ein Verfahren zum Betrieb eines elektrisch beheizbaren katalytischen Konverters, der als Teil eines Abgasreinigungssystems einem Verbrennungsmotor mit elektronischer Motorsteuerung nachgeschaltet ist, wobei der katalytische Konverter über eine elektronische Regelung und einen Leistungsschalter mit einem elektrischen Strom beaufschlagbar ist und auf eine für die katalytische Umsetzung erforderliche Mindesttemperatur gebracht und/oder oberhalb dieser Temperatur gehalten werden soll, mit folgenden Merkmalen:

a) die Temperatur des Konverters ist Regelgröße von mindestens zwei unterschiedlichen Regelkreisen;

b) im Normalzustand erfolgt die Regelung durch mindestens einen Vorzugsregelkreis;

c) jeder in Betrieb befindliche Regelkreis wird zur Feststellung von Störungen automatisch überwacht;

d) bei Feststellung einer Störung wird automatisch auf einen anderen Regelkreis umgeschaltet.

Einzelheiten der vorliegenden Erfindung werden anhand von Ausführungsbeispielen und der Zeichnung noch näher erläutert. Das Prinzip besteht darin, daß die Regelung der Temperatur des Konverters nicht ausschließlich von der Funktion eines einzigen Regelkreises mit verschiedenen Elementen abhängt, sondern daß Ersatzregelkreise (Notlaufregelungen) zur Verfügung stehen, falls der eigentlich für die Regelung vorgesehene Vorzugsregelkreis als nicht mehr funktionstüchtig erkannt wird. Erfolgt beispielsweise im Normalzustand die Regelung durch einen Vorzugsregelkreis, dessen Istwertgeber ein Temperaturfühler im Konverter ist, so besteht ein Risiko darin, daß dieser Temperaturfühler defekt wird. Ohne zusätzliche Maßnahmen würde in diesem Falle der Konverter entweder gar nicht oder ununterbrochen beheizt, was beides unerwünscht und im zweiten Falle sogar nicht ungefährlich wäre. Erfindungsgemäß wird jedoch die Störung des Regelkreises festgestellt, so daß dieser außer Betrieb gesetzt und durch einen anderen Regelkreis ersetzt werden kann. Der zweite Regelkreis kann beispielsweise als Istwert einen berechneten Temperaturwert benutzen, welcher aus Daten ermittelt wird, die durch Meßfühler oder die Motorsteuerung verfügbar sind. Im einfachsten Fall kann die Regelung auch eine Einschaltung der Beheizung für eine vorgebbare Zeit sein. Diese Art der Regelung könnte auch als Steuerung bezeichnet werden, jedoch wird zur Vereinfachung in den hier vorliegenden Unterlagen kein Unterschied zwischen Regelung und Steuerung gemacht.

Von den jeweiligen Anforderungen an die Betriebssicherheit und Verfügbarkeit der elektrischen Beheizung des katalytischen Konverters kann es abhängen, wieviele und welche unterschiedlichen Regelkreise in einem Elektronikbaustein bereitgestellt werden. Um nicht von einem einzigen Regelkreis abhängig zu sein, sollte der Elektronikbaustein mindestens zwei der folgenden Regelkreise enthalten:

a) einen Regelkreis mit einem Temperaturfühler im katalytischen Konverter als Istwertgeber;

b) einen Regelkreis, bei dem der Istwert durch eine Wärmebilanzrechnung aus Daten der Motorsteuerung berechnet wird;

c) einen Regelkreis, bei dem der Istwert aus Meßwerten von Temperaturmeßgebern außerhalb des katalytischen Konverters ermittelt wird;

d) einen Regelkreis, der die Temperatur des katalytischen Konverters durch Vorgabe einer Heizzeit in Abhängigkeit von Meßwerten, z. B. eines Außentemperaturfühlers und/oder eines Motortemperaturfühlers, erhöht;

e) einen Regelkreis, der die Temperatur des katalytischen Konverters durch Vorgabe einer festen Heizzeit erhöht.

Alle diese Regelkreise haben gemeinsam den katalytischen Konverter als Regelstrecke, den Leistungsschalter als Stellglied und die Temperatur im katalytischen Konverter als Regelgröße. Wegen einiger Besonderheiten sei insbesondere im folgenden noch auf den Regelkreis gemäß b) eingegangen, da dieser besondere Bedeutung in den Fällen haben kann, in denen ein Temperaturfühler im katalytischen Konverter nicht vorhanden oder defekt ist. Grundsätzlich stehen bei einem elektronisch gesteuerten Motor moderner Bauart in der Motorsteuerung sehr viele Daten über den Betriebszustand des Motors zur Verfügung, so daß aus diesen sehr genau abgeleitet werden kann, wieviel Kraftstoff und wieviel Luft der Motor gerade bekommt, wieviel er davon verbrennt, welche Temperatur das aus dem Motor austretende Abgas hat und welcher Restenergiegehalt an noch umsetzbaren Anteilen im Abgas enthalten ist. Mit diesen Informationen und der bekannten Wärmekapazität des katalytischen Konverters, sowie dessen Leistungsaufnahme bei der elektrischen Beheizung läßt sich die Temperatur sehr genau ermitteln. Zunächst kann man die Abgastemperatur TAbgas [°C] mit einer empirisch ermittelten Näherungsformel wie folgt ermitteln:

$$TAbgas = \dot{m} * (\log (t + 2)^3)^B$$

mit

| | | |
|---|---|---|
| $\dot{m}$ = | Massenstrom Gas [kg/s] | |
| A = | systemabhängige Konstante, z. B. 300 | |
| B = | systemabhängige Konstante, z. B. 1,15 | |
| t = | Zeit nach Motorstart [s] | |

Falls der Massenstrom $\dot{m}$ des Gases aus der Motorsteuerung nicht zur Verfügung steht, kann dieser wie folgt berechnet werden:

$$\dot{m} = \frac{HV * n * SGas * Psaug}{2 * Pumgeb}$$

mit

| | | |
|---|---|---|
| HV = | Hubvolumen [m³] | |
| n = | Motordrehzahl [l/s] | |
| SGas = | 1,2 [kg/m³] | |
| Psaug = | Saugrohrdruck [bar] | |
| Pumgeb = | Umgebungsdruck [bar] = 1 [bar] | |

Die erforderliche Energiemenge QGas, um das Abgas auf Betriebstemperatur aufzuheizen, kann rekursiv berechnet werden aus:

$$QGas_{(n)} = (TAbgas-TStart) * \dot{m} * CAbgas + QGas_{(n-1)}$$

mit

| | | |
|---|---|---|
| n = | Nummer des Rechenschrittes (z. B. im Sekundentakt) | |
| TStart = | Temperatur, bei der die katalytische Reaktion im katalytischen Konverter einsetzt [°C] | |
| Abgas = | Wärmekapazität des Abgases = 1000 [J/kgk] | |

Die erforderliche Energiemenge QKat, um den katalytischen Konverter auf TStart aufzuheizen ergibt sich aus

$$QKat = Qel*te - CHK * TStart$$

mit

| | | |
|---|---|---|
| Qel = | zugeführte elektrische Heizleistung [w] | |
| te = | Zeit seit Heizbeginn | |
| CHK = | Wärmekapazität des katalytischen Konverters [J/K] | |

Die elektrische Heizleistung läßt sich rekursiv nach der Formel berechnen

$$Qel_{(n)} = Qel_{(n-1)} + \frac{U^2}{RHK}$$

mit

U = Batteriespannung [V]

RHK = Elektrischer Widerstand des Konverters [Ohm]

Aus den so berechneten Größen läßt sich eine Wärmebilanzgleichung aufstellen, nämlich

$$QGes_{(n)} = QGas_{(n)} + QKat + Qel_{(n)}$$

mit

QGes = Energiesumme

Ist $QGes_{(n)}$ negativ, so ist der Istwert der Temperatur im katalytischen Konverter unter TStart, so daß eine weitere Beheizung notwendig ist. Wird $QGes_{(n)}$ positiv, beginnt die katalytische Umsetzung, und die Beheizung kann beendet werden.

Der Sollwert der Temperatur im katalytischen Konverter und TStart in der Berechnung können zeitabhängig über die Lebensdauer des katalytischen Konverters höher gesetzt werden, um einer durch Alterung bestimmten höheren Anspringtemperatur der katalytischen Reaktion Rechnung zu tragen. Die Konstanten A und B müssen an fahrzeugspezifische Bedingungen, z. B. den Abstand des katalytischen Konverters vom Motor und die Abgasleitungsführung empirisch angepaßt werden.

Die Berechnungen können im Sekundentakt oder schneller erfolgen, was zur Bereitstellung von genügend genauen Istwerten für die Regelung ausreicht, dabei können die ermittelten Istwerte wiederum daraufhin überprüft werden, ob diese innerhalb eines vernünftigen Bereiches liegen oder nicht. Falls die berechneten Istwerte aus dem Rahmen fallen, liegt eine Störung des Regelkreises vor, so daß eine Umschaltung auf einen anderen Regelkreis erforderlich ist.

Wenn ohnehin zwei oder mehr Regelkreise vorhanden sind, so ist es sinnvoll, diese auch gleichzeitig in Betrieb zu nehmen, so daß ein gegenseitiger Vergleich und/oder eine gegenseitige Störungsüberprüfung möglich ist, wobei dem Regelkreis mit der einfachsten Struktur und damit der geringsten Störanfälligkeit eine Sicherungsfunktion zugeordnet wird, indem dieser Regelkreis den elektrischen Strom einschaltet, wenn ein Einschalten durch andere Regelkreise nicht erfolgt, und den Strom abschaltet, wenn eine Abschaltung durch die anderen Regelkreise nach vorgegebenen Kriterien nicht erfolgt. Dabei ist es sinnvoll, als einfachsten Regelkreis eine reine Zeitsteuerung zu wählen, welche den elektrischen Strom für ein vorgebbares Zeitintervall einschaltet, bzw. nach einem vorgebbaren Zeitintervall ausschaltet. Im Prinzip kann dieses Zeitintervall aber auch von bestimmten Meßwerten, beispielsweise der Umgebungstemperatur, der Motortemperatur oder anderen Kriterien abhängig gemacht werden.

Für die Verfügbarkeit des Kraftfahrzeuges ist es erforderlich, daß unter bestimmten Voraussetzungen sämtliche Regelkreise und damit die elektrische Beheizung des katalytischen Konverters außer Betrieb gesetzt werden, wenn bestimmte vorgebbare Bedingungen erfüllt sind, z. B. die zur Vefügung stehende elektrische Spannung oder Energie unter einen Mindestwert, der zum Starten des Motors erforderlich ist, fällt oder der Spannungsabfall über dem Leistungsschalter außerhalb eines zulässigen Bereiches liegt. Die Messung der über dem Leistungsschalter abfallenden Spannung ist besonders aussagekräftig. Solange der Leistungsschalter geöffnet ist, liegt hier die volle Batteriespannung an und kann geprüft werden. Wird der Leistungsschalter geschlossen, so wird der Spannungsabfall an diesem Schalter sehr klein, sofern das System in Ordnung ist. Liegt ein größerer Spannungsabfall vor, so hat der katalytische Konverter entweder einen Kurzschluß oder der Leistungsschalter ist defekt und hat einen zu hohen Widerstand. Beides sollte zur Abschaltung des Heizsystems führen. Wird die Spannung beim Schließen des Leistungsschalters nicht kleiner, so liegt eine Unterbrechung des Heizstromkreises vor. Die Messung des Spannungsabfalls über dem Leistungsschalter ist daher eine sehr vielseitige Möglichkeit zur Überprüfung der Funktionsfähigkeit des Systems.

Eine Störung im Heizungssystem des katalytischen Konverters sollte in jedem Falle als Fehlermeldung angezeigt oder gespeichert werden. In vielen Fällen wird dabei schon eine Diagnose oder Eingrenzung der möglichen Fehler erreichbar sein. Je nach den gesetzlichen Bestimmungen in einzelnen Ländern kann eine solche Fehlermeldung auch mit einer Einschränkung des Fahrbetriebes verbunden werden, um den Betreiber des Kraftfahrzeuges zum Aufsuchen einer Werkstatt zu veranlassen.

Zur Lösung der gestellten Aufgabe dient auch eine Vorrichtung zum Betrieb eines elektrisch beheizbaren katalytischen Konverters mit einem für eine elektrische Leistung von etwa 0,5 bis 10 kW ausgelegten Stromkreis, der eine Stromquelle, einen Leistungsschalter, einen elektrisch beheizbaren katalytischen Konverter und elektrische Leitungen enthält, mit folgenden Merkmalen:

a) der Leistungsschalter ist gemeinsames Stellglied und der katalytische Konverter gemeinsame Regelstrecke von mindestens zwei unterschiedlichen Regelkreisen, deren gemeinsame Regelgröße die Temperatur im katalytischen Konverter ist;

b) zu den unterschiedlichen Regelkreisen gehören Regelelektroniken, die in einem Elektronikbaustein angeordnet sind;

c) der Elektronikbaustein enthält Mittel zur Überprüfung der Regelkreise und zur Auswahl eines funktionstüchtigen Regelkreises.

Der Elektronikbaustein kann entweder in die Motorsteuerung eines Kraftfahrzeuges integriert oder separat zu dieser angeordnet sein. Im allgemeinen wird wenigstens der Leistungsschalter aus Gründen der elektromagnetischen Störsicherheit separat angeordnet sein.

Bevorzugt enthält ein erster Regelkreis einen Temperaturfühler im katalytischen Konverter als Istwertgeber, der mit dem Elektronikbaustein verbunden ist. Zu einem zweiten Regelkreis gehört ein Istwertgeber, welcher aus Daten der Motorsteuerung und gegebenenfalls unter Verarbeitung weiterer Meßwerte einen Istwert für die Temperatur im katalytischen Konverter berechnet. Schließlich ist als weiterer Regelkreis eine einfache oder von Meßwerten abhängige Zeitsteuerung vorhanden.

Ausführungsbeispiele der Erfindung sind schematische in der Zeichnung dargestellt, und zwar zeigen

Figur 1 die Anordnung eines elektrisch beheizbaren katalytischen Konverters und anderer Bauteile in einem Kraftfahrzeug,

Figur 2 den schematischen Aufbau der zu einem elektrisch beheizbaren Katalysator gehörenden Elektrik und Elektronik,

Figur 3 den schematischen Aufbau eines Elektronikbausteins mit mehreren Regelkreisen und

Figur 4 beispielhaft ein vereinfachtes Flußdiagramm für den Ablauf eines erfindungsgemäßen Verfahrens zum sicheren Betrieb eines elektrisch beheizbaren katalytischen Konverters.

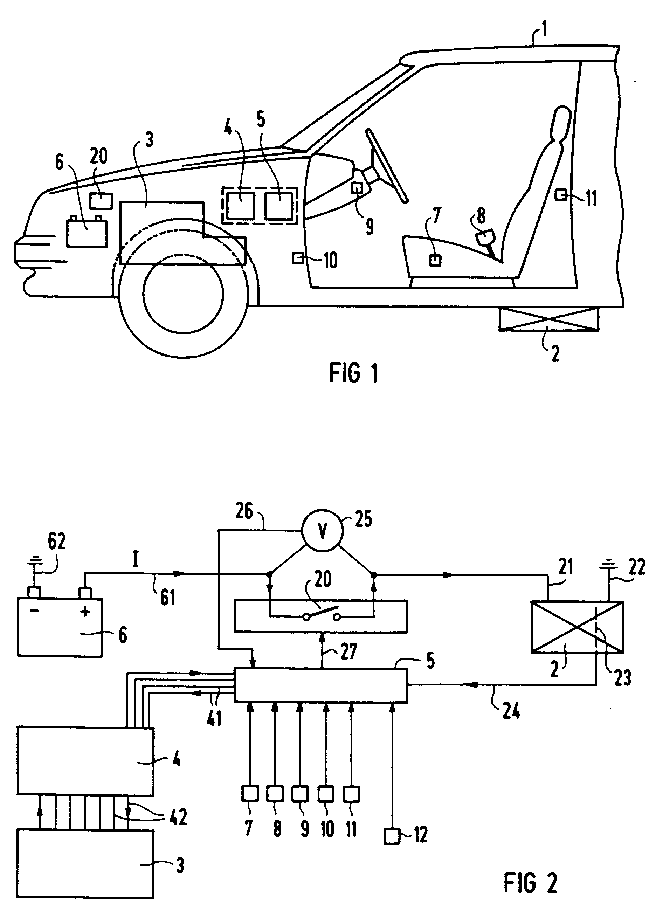

Figur 1 zeigt ein Kraftfahrzeug 1 mit einem unter der Bodenwanne angeordneten elektrisch beheizbaren katalytischen Konverter 2, welcher einem Verbrennungsmotor 3 nachgeschaltet ist. Der Verbrennungsmotor 3 steht über Steuer- und Meßleitungen 42 mit einer Motorsteuerung 4 in Verbindung. Ebenfalls über Meßleitungen 41 ist ein Elektronikbaustein 5 mit der Motorsteuerung 4 verbunden. Wie schematischen angedeutet können Motorsteuerung 4 und Elektronikbaustein 5 auch zu einer Einheit zusammengefaßt sein. Außerdem ist das Fahrzeug mit einer Batterie 6 und verschiedenen Sensoren 7, 8, 9, 10, 11 am Fahrersitz, dem Gurtschloß, dem Zündschloß, der Tür und/oder dem Türgriff angeordnet. Auch ein Temperatursensor 12 zur Messung der Außentemperatur oder der Motortemperatur kann vorhanden sein. Im allgemeinen nahe der Batterie ist ein Leistungsschalter 20 angeordnet, welcher geeignet ist, hohe Ströme bis zu einigen hundert Ampere zu schalten.

Wie aus Figur 2 zu ersehen ist, besteht der eigentliche Heizstromkreis aus der Batterie 6 der Heizstromleitung 61, dem Leistungsschalter 20, der Heizstromleitung 21, dem katalytischen Konverter 2, der Masseleitung 22 und der Masseleitung 62. Statt der Batterie 6 kann prinzipiell auch ein Generator als Energiequelle dienen, sofern die Beheizung des katalytischen Konverters erst nach dem Start des Verbrennungsmotors 3 erfolgen soll.

Der Leistungsschalter 20 wird über eine Steuerleitung 27 vom Elektronikbaustein 5 bei Bedarf angesteuert. Der Spannungsabfall über dem Leistungsschalter 20 kann mit einem Spannungsmesser 25 gemessen und das Meßergebnis über eine Meßleitung 26 an den Elektronikbaustein 5 weitergeleitet werden. Der Elektronikbaustein 5 steht über Meßleitungen 41 mit der Motorsteuerung 4 in Verbindung, wobei sowohl Daten von der Motorsteuerung 4 zum Elektronikbaustein 5 wie auch in umgekehrter Richtung weitergeleitet werden können.

Außerdem steht der Elektronikbaustein 4 über einer Meßleitung 24 mit einem Temperaturfühler 23 im katalytischen Konverter 2 in Verbindung. Auch die Meßwerte gegebenenfalls vorhandener Sensoren 7, 8, 9, 10, 11 und eventueller Temperaturfühler 12 können zum Elektronikbaustein 5 führen.

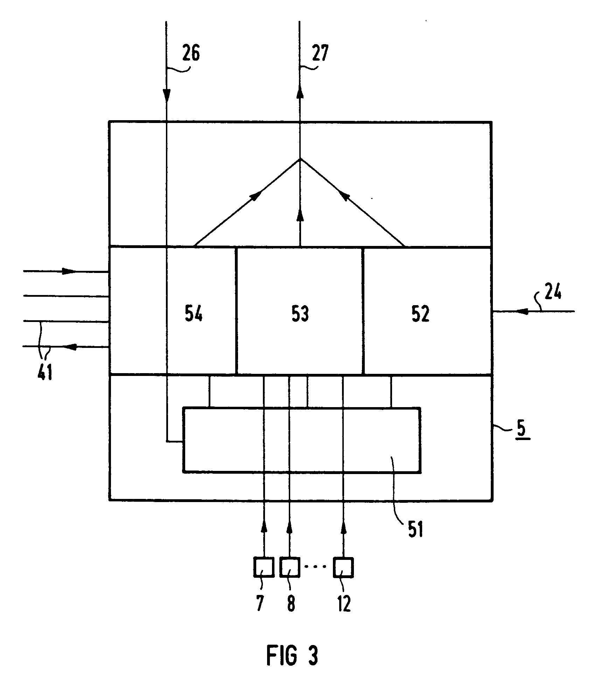

Figur 3 zeigt ganz schematisch ein Beispiel für den prinzipiellen Aufbau eines Elektronikbausteines 5. Dieser Baustein enthält drei oder mehr Regelkreiselektroniken 52, 53, 54. Dabei dient die Regelkreiselektronik 52 zur Regelung der Temperatur im katalytischen Konverter 2 unter Verwendung des Temperaturmeßwertes des Temperaturfühlers 23 als Istwert. Die Regelkreiselektronik 54 verwendet einen Istwert, welcher aus einer Wärmebilanzrechnung ermittelt wird. Die Berechnung erfolgt mit Daten der Motorsteuerung, welche über die Leitungen 41 zugeführt werden. Die Regelkreiselektronik 53 enthält eine Zeitsteuerung zur Beheizung des katalytischen Konverters, gegebenenfalls unter Berücksichtigung externer Meßwerte bei der Berechnung des Heizintervalls. Eine Kontrollelektronik 51 kontrolliert die Regelkreise auf ihre Funktionsfähigkeit und bewirkt eine Umschaltung von einem nicht funktionsfähigen Regelkreis auf einen funktionsfähigen, wenn ein Fehler des im Betrieb befindlichen Regelkreises festgestellt wird. Dabei kann die Kontrollelektronik 51 zusätzlich weitere Informationen, beispielsweise über den Spannungsabfall am Leistungsschalter 20 berücksichtigen, und beim Auftreten anormaler Zustände die Beheizung unterbrechen oder gar nicht erst auslösen.

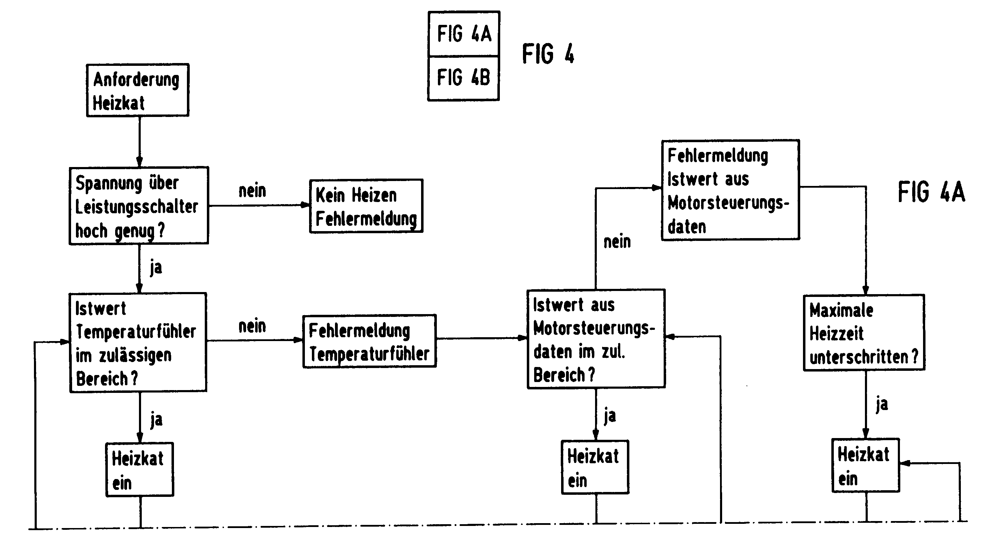

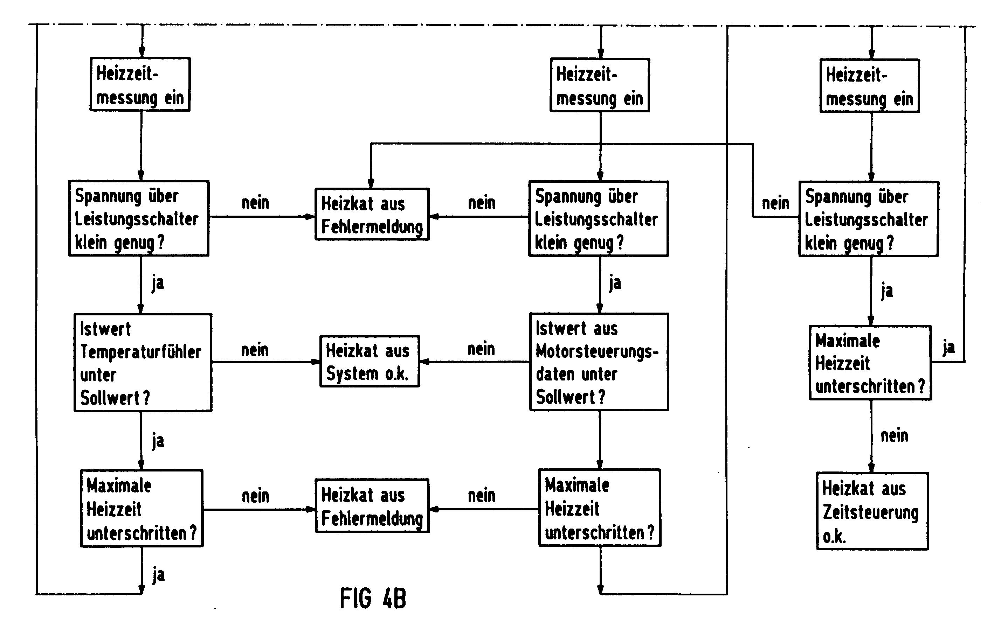

Ein stark vereinfachtes Flußdiagramm für den Betrieb eines elektrisch beheizbaren katalytischen Konverters zeigt Figur 4. Dabei ist zu beachten, daß normalerweise die Elektronik eines Heizkatalysators noch mit zahlreichen weiteren Funktionen verknüpft sein kann, welche hier zur Vereinfachung weggelassen wurden. Insbesondere muß für viele Fahrzeugtypen die Zuführung von Sekundärluft in das Abgassystem in Abhängigkeit von der Temperatur des Heizkatalysators und von anderen Parametern geregelt werden, und es können in der Elektronik auch Zusätzliche Mittel zur Überwachung des katalytischen Konverters auf seine Funktionsfähigkeit und seinen Betriebszustand vorhanden sein. Diese Teile sind bei der vorliegenden Übersicht weggelassen.

Wird die Beheizung des katalytischen Konverters angefordert, sei es vor dem Starten des Motors durch Ansprechen verschiedener Sensoren im Kraftfahrzeug oder nach dem Starten des Motors von der Motorsteuerung, so ergibt sich folgender Ablauf:

Zunächst wird geprüft, ob die Spannung über dem Leistungsschalter oberhalb eines Schwellwertes liegt. Ist sie nicht hoch genug, so erfolgt eine Fehlermeldung und es wird kein Heizvorgang ausgelöst. Möglicherweise liegt in diesem Falle ein Fehler bei der Batterie 6 oder eine Leitungsunterbrechung in den Heizleitungen 21, 22, 61, 62 vor. Ist die Spannung hoch genug, so wird als nächstes der Istwert des Temperaturfühlers 23 abgefragt. Falls dieser im zulässigen Bereich liegt, d. h. eine sinnvolle Temperatur angibt, wird der katalytische Konverter (kurz: "Heizkat") eingeschaltet. Gleichzeitig wird eine Heizzeitmessung eingeschaltet. Anschließend wird wiederum die Spannung über dem Leistungsschalter 20 abgefragt. Ist sie dieses Mal nicht klein genug, so wird der Heizkat 2 ausgeschaltet und eine Fehlermeldung abgegeben. Möglicherweise ist der Leistungsschalter 20 teilweise defekt oder es liegt ein Kurzschluß am Heizkat 2 vor.

Ist die Spannung über dem Leistungsschalter 20 klein genug, so wird wiederum der Istwert des Temperaturfühlers 23 abgefragt und mit einem Sollwert verglichen. Liegt der Istwert unter dem Sollwert, so wird abgefragt, ob die maximale Heizzeit noch unterschritten ist. Ist auch dies der Fall, so wird der ganze Vorgang beginnend mit einer Überprüfung des Istwertes des Temperaturfühlers 23 wiederholt. Liegt der Istwert des Temperaturfühlers 23 schließlich nicht mehr unter dem Sollwert, so wird der Heizkat 2 ausgeschaltet. Das System hat in diesem Falle ordnungsgemäß funktioniert. Sollte der Heizkat 2 auf diesem Wege nicht ausgeschaltet werden, so wird er spätestens bei Überschreiten der maximalen Heizzeit ausgeschaltet, wobei dann jedoch eine Fehlermeldung abgegeben wird, da möglicherweise der Temperaturfühler 23 nicht in Ordnung oder die Heizleistung insgesamt zu klein ist.

Sofern der Istwert des Temperaturfühlers 23 bei der anfänglichen Prüfung nicht im zulässigen Bereich liegt, deutet dies auf einen Bruch oder Kurzschluß im Temperaturfühler 23 oder seiner Meßleitung 24 hin. In diesem Falle wird eine Fehlermeldung abgegeben und auf einen anderen Regelkreis 54 umgeschaltet. Dieser Regelkreis 54 verwendet als Istwert einen aus den Motorsteuerungsdaten berechneten Wert. Auch dieser wird daraufhin überprüft, ob er in einem zulässigen Bereich liegt. Ist dies der Fall, so wird der Heizkat 2 eingeschaltet, falls er noch nicht eingeschaltet ist. Auch die Heizzeitmessung wird eingeschaltet bzw. weitergeführt. Auch in diesem Regelkreis wird die Spannung über dem Leistungsschalter 20 überprüft und die eventuelle Überschreitung der maximalen Heizzeit festgestellt. Arbeitet der Regelkreis 54 normal, so liegt irgendwann der aus den Motordaten errechnete Istwert über dem Sollwert und der Heizkat 2 wird ausgeschaltet. Das Syssstem ist bis auf die Fehlermeldung über dem Temperaturfühler nach wie vor verfügbar.

Sollte sich bei der Überprüfung des aus den Motordaten berechneten Istwertes ergeben, daß dieser außerhalb des zulässigen Bereiches liegen, so wird auch hier eine Fehlermeldung abgegeben und auf den nächsten Regelkreis 53 umgeschaltet. Diese prüft, ob die maximale Heizzeit noch nicht überschritten ist und schaltet gegebenenfalls den Heizkat 2 ein, sofern dies noch nicht geschehen ist. Auch die Heizzeitmessung wird wieder eingeschaltet bzw. weitergeführt. Nach einer Kontrolle der Spannung über dem Leistungsschalter 20 wird die Heizzeit abgefragt und bei Überschreiten der maximalen Heizzeit der Heizkat 2 ausgeschaltet. Auch in diesem Falle ist das System noch verfügbar, jedoch liegen zwei Fehlermeldungen über den Temperaturfühler und die Istwertberechnung aus den Motorsteuerungsdaten vor.

Wie deutlich zu erkennen ist, sind die Regelkreise hierarchisch angeordnet, d. h. der am genauesten arbeitende, aber auch störanfälligste Regelkreis ist der Vorzugsregelkreis. Erst wenn dieser teilweise ausfällt, wird auf den nächsten Regelkreis umgeschaltet, was sich bei Ausfall des zweiten Regelkreises durch Umschaltung auf einen dritten Regelkreis wiederholt. Grundsätzlich können auch vier oder mehr Regelkreise vorhanden sein. Auch kann bei Vorhandensein von zwei Temperaturfühlern der erste Regelkreis doppelt ausgelegt sein, was die Verfügbarkeit deutlich erhöht und gegenseitige Kontrollen der Regelkreise möglich macht.

Wichtig ist jedenfalls, daß als unterste hierarchische Stufe ein möglichst wenig anfälliges Regelsystem, im einfachsten Fall eine reine Zeitsteuerung, vorhanden ist, so daß die Verfügbarkeit der elektrischen Heizung hoch bleibt, auch wenn keine optimale Regelung mehr erfolgen kann.

Das erfindungsgemäße Verfahren zum Betrieb eines elektrisch beheizbaren katalytischen Konverters erhöht die Betriebssicherheit und Verfügbarkeit der elektrischen Beheizung, ohne die Verfügbarkeit des Kraftfahrzeuges negativ zu beeinflussen. Strenge Abgasvorschriften können daher mit großer Zuverlässigkeit auch bei Ausfall einzelner Komponenten des Regelsystems eingehalten werden.

**Patentansprüche**

1. Verfahren zum Betrieb eines elektrisch beheizbaren katalytischen Konverters (2), der als Teil eines Abgasreinigungssystems einem Verbrennungsmotor (3) mit elektronischer Motorsteuerung (4) nachgeschaltet ist, wobei der katalytische Konverter (2) über eine elektronische Regelung (5) und einen Leistungsschalter (20) mit einem elektrischen Strom (I) beaufschlagbar ist und auf eine für die katalytische Umsetzung erforderliche Mindesttemperatur gebracht und/oder oberhalb dieser Temperatur gehalten werden soll,
   **dadurch gekennzeichnet**, daß
   a) die Temperatur des katalytischen Konverters (2) eine Regelgröße von mindestens zwei unterschiedlichen Regelkreisen ist;
   b) im Normalzustand die Regelung durch mindestens einen Vorzugsregelkreis erfolgt;
   c) jeder zur Regelung in Betrieb befindliche Regelkreis zur Feststellung von Störungen automatisch überwacht wird;
   d) bei Feststellung einer Störung wird automatisch auf einen anderen Regelkreis umgeschaltet.

2. Verfahren nach Anspruch 1, **dadurch gekennzeichnet**, daß die Regelkreise unterschiedliche Struktur und/oder unterschiedliche Komplexität aufweisen.

3. Verfahren nach Anspruch 1 oder 2, **dadurch gekennzeichnet**, daß bei Feststellung einer Störung eine Fehleranzeige oder eine Speicherung einer Fehlermeldung erfolgt.

4. Verfahren nach Anspruch 1, **dadurch gekennzeichnet**, daß der Vorzugsregelkreis als Istwertgeber einen Temperaturfühler (23) im katalytischen Konverter (2) enthält und die Beaufschlagung des katalytischen Konverters (2) mit elektrischem Strom (I) in Abhängigkeit von der am Temperaturfühler (23) gemessenen Temperatur erfolgt.

5. Verfahren nach einem der vorhergehenden Ansprüche, **dadurch gekennzeichnet**, daß die Temperatur im katalytischen Konverter (2) Regelgröße von mindestens zwei der folgenden Regelkreise ist, welche alle gemeinsam den katalytischen Konverter (2) als Regelstrecke, den Leistungsschalter (20) als Stellglied und die Temperatur im katalytischen Konverter (2) als Regelgröße haben:

   a) ein Regelkreis mit einem Temperaturfühler (23) im katalytischen Konverter (2) als Istwertgeber;
   b) ein Regelkreis, bei dem der Istwert durch eine Wärmebilanzrechnung aus Daten der Motorsteuerung (4) berechnet wird;
   c) ein Regelkreis, bei dem der Istwert aus Meßwerten von Temperaturmeßgebern (12) außerhalb des katalytischen Konverters (2) ermittelt wird;
   d) ein Regelkreis, der die Temperatur des katalytischen Konverters (2) durch Vorgabe einer Heizzeit in Abhängigkeit von Meßwerten eines Außentemperaturfühlers (12) und/oder eines Motortemperaturfühlers erhöht;
   e) ein Regelkreis, der die Temperatur des katalytischen Konverters (2) durch Vorgabe einer festen Heizzeit erhöht.

6. Verfahren nach einem der vorhergehenden Ansprüche, **dadurch gekennzeichnet**, daß gleichzeitig zwei oder mehr Regelkreise in Betrieb sind, die einen gegenseitigen Vergleich und/oder eine gegenseitige Störungsüberprüfung ermöglichen, wobei dem Regelkreis mit der einfachsten Struktur und damit der geringsten Störanfälligkeit eine Sicherungsfunktion zugeordnet ist, in dem dieser Regelkreis den elektrischen Strom einschaltet, wenn ein Einschalten durch andere Regelkreise nicht erfolgt, und den Strom abschaltet, wenn eine Abschaltung durch die anderen Regelkreise nach vorgegebenen Kriterien nicht erfolgt.

7. Verfahren nach einem der vorhergehenden Ansprüche, **dadurch gekennzeichnet**, daß einer der Regelkreise als einfachster Regelkreis eine reine Zeitsteuerung enthält, welche den elektrischen Strom für ein vorgebbares Zeitintervall einschaltet, bzw. den Strom nach einem vorgebbaren Zeitintervall ausschaltet.

8. Verfahren nach einem der vorhergehenden Ansprüche, **dadurch gekennzeichnet**, daß sämtliche Regelkreise und damit die elektrische Beheizung des katalytischen Konverters (2) außer Betrieb gesetzt werden, wenn bestimmte vorgebbare Bedingungen erfüllt sind, z . B. die zur Verfügung stehende elektrische Spannung oder Energie unter einen Mindestwert fällt oder der Spannungsabfall am Leistungsschalter (20) unter einem Mindestwert oder über einem Maximalwert liegt.

9. Verfahren nach Anspruch 8, **dadurch gekennzeichnet**, daß die Außerbetriebsetzung der elektrischen Beheizung eine Fehlermeldung auslöst und/oder nur noch einen begrenzten Fahrbetrieb zum Aufsuchen einer Werkstatt zuläßt.

10. Vorrichtung zur Durchführung des Verfahrens nach Anspruch 1, die einen elektrisch beheizbaren katalytischen Konverter (2) mit einem für eine elektrische Leistung von etwa 0,5 bis 10 kW ausgelegten Stromkreis, der eine Stromquelle (6), einen Leistungsschalter (20), einen elektrisch beheizbaren katalytischen Konverter (2) und elektrische Leitungen (21, 22, 61, 62) enthalt, wobei der katalytische Konverter (2) als Teil eines Abgasreinigungssystems einem Verbrennungsmotor (3) mit elektronischer Motorsteuerung (4) nachgeschaltet ist, dadurch gekennzeichnet, daß

a) der Leistungsschalter (20) gemeinsames Stellglied ist und der katalytische Konverter (2) gemeinsame Regelstrecke von mindestens zwei unterschiedlichen Regelkreisen, deren gemeinsame Regelgröße die Temperatur im katalytischen Konverter (2) ist;
b) zu den unterschiedlichen Regelkreisen Regelelektroniken (52, 53, 54) gehören, die in einem Elektronikbaustein (5) angeordnet sind;
c) der Elektronikbaustein (5) Mittel (51) zur Überprüfung der Regelkreise (52, 53, 54) und zur Answahl eines fünktionstüchtigen Regelkreises enthält.

11. Vorrichtung nach Anspruch 10, **dadurch gekennzeichnet,** daß zu einem ersten Regelkreis ein Temperaturfühler (23) im katalytischen Konverter (2) als Istwertgeber gehört, der mit dem Elektronikbaustein (5) verbunden (24) ist.

12. Vorrichtung nach Anspruch 10 oder 11, **dadurch gekennzeichnet**, daß zu einem zweiten Regelkreis ein Istwertgeber gehört, der den Istwert aus Daten der Motorsteuerung mittels einer Wärmebilanzrechnung ermittelt.

13. Vorrichtung nach einem der vorhergehenden Ansprüche, **dadurch gekennzeichnet**, daß ein zusätzlicher Regelkreis vorhanden ist, welcher die Temperatur im katalytischen Konverter (2) aufgrund einer Zeitsteuerung (53) des elektrischen Stromes erhöht.

**Claims**

1. A method of operating an electrically heatable catalytic converter (2) which as part of an exhaust gas cleaning system is disposed downstream of an internal combustion engine (3) with electronic engine control (4), wherein the catalytic converter (2) can be supplied with an electric current (I) by way of an electronic regulating means (5) and a power switch (20) and is to be brought to a minimum temperature required for catalytic conversion and/or is to be held above that temperature, characterised in that

a) the temperature of the catalytic converter (2) is a regulating parameter of at least two different regulating circuits;
b) in the normal condition regulation is effected by at least one preferential regulating circuit;
c) each regulating circuit which is in operation for regulating purposes is automatically monitored to detect faults; and
d) when a fault is detected the arrangement is automatically switched over to another regulating circuit.

2. A method according to claim 1 characterised in that the regulating circuits have a different structure and/or a different complexity.

3. A method according to claim 1 or claim 2 characterised in that when a fault is detected a malfunction indication is produced or storage of a malfunction message is effected.

4. A method according to claim 1 characterised in that the preferential regulating circuit includes a temperature sensor (23) in the catalytic converter (2) as an actual value generator and the catalytic converter (2) is supplied with electric current (I) in dependence on the temperature measured at the temperature sensor (23).

5. A method according to one of the preceding claims characterised in that the temperature in the catalytic converter (2) is a regulating parameter of at least two of the following circuits which all have in common the catalytic converter (2) as the section for regulation, the power switch (20) as a control member and the temperature in the catalytic converter (2) as a regulating parameter:

a) a regulating circuit with a temperature sensor (23) in the catalytic converter (2) as an actual value generator;
b) a regulating circuit in which the actual value is calculated from data of the engine control (4) by a thermal balance-sheet calculation;
c) a regulating circuit in which the actual value is ascertained from measurement values from temperature measurement sensors (12) outside the catalytic converter (2);

d) a regulating circuit which raises the temperature of the catalytic converter (2) by presetting a heating time in dependence on measurement values of an external temperature sensor (12) and/or an engine temperature sensor; and

e) a regulating circuit which raises the temperature of the catalytic converter (2) by presetting a fixed heating time.

6. A method according to one of the preceding claims characterised in that two or mere regulating circuits which permit mutual comparison and/or mutual fault checking are simultaneously in operation, wherein a protection function is associated with the regulating circuit with the simplest structure and thus with the lowest susceptibility to trouble, insofar as said regulating circuit switches on the electric current when switching on is not effected by other regulating circuits and switches off the current when switching off is not effected by the other regulating circuits in accordance with predetermined criteria.

7. A method according to one of the preceding claims characterised in that one of the regulating circuits, as the simplest regulating circuit, contains a simple time control means which switches on the electric current for a presettable period of time or switches off the current after a presettable period of time.

8. A method according to one of the preceding claims characterised in that all regulating circuits and therewith the electrical heating of the catalytic converter (2) are put out of operation when certain predeterminable conditions are met, for example the available electrical voltage or energy falls below a minimum value or the voltage drop at the power switch (20) is below a minimum value or above a maximum value.

9. A method according to claim 8 characterised in that the fact that the electrical heating is taken out of operation triggers a malfunction message and/or still permits only limited driving operation to find a garage.

10. Apparatus for carrying out the method according to clad 1 which includes an electrical heatable catalytic converter (2) with a circuit which is designed for an electrical power of about 0.5 to 10 kW and which includes a current source (6), a power switch (20), an electrically heatable catalytic converter (2) and electrical lines (21, 22, 61, 62), wherein the catalytic converter (2) as part of an exhaust gas cleaning system is disposed downstream of an internal combustion engine (3) with electronic engine control (4), characterised in that

a) the power switch (20) is a common control member and the catalytic converter (2) is a common regulation section of at least two different regulating circuits whose common regulating parameter is the temperature in the catalytic converter (2);

b) electronic regulating systems (52, 53, 54) which are arranged in an electronic module (5) belong to the different regulating circuits; and

c) the electronic module (5) includes means (51) for checking the regulating circuits (52, 53, 54) and for selecting an operable regulating circuit.

11. Apparatus according to claim 10 characterised in that a temperature sensor (23) in the catalytic converter (2) belongs as an actual value generator to a first regulating circuit, the temperature sensor being connected (24) to the electronic module (5).

12. Apparatus according to claim 10 or claim 11 characterised in that an actual value generator which ascertains the actual value from data of the engine control by means of a thermal balance-sheet calculation belongs to a second regulating circuit.

13. Apparatus according to one of the preceding claims characterised in that there is an additional regulating circuit which raises the temperature in the catalytic converter (2) on the basis of a time control (53) of the electric current.

**Revendications**

1. Procédé destiné au fonctionnement d'un convertisseur catalytique (2) pouvant être chauffé électriquement qui, en tant que partie d'un système d'épuration des gaz d'échappement, est disposé en aval d'un moteur à combustion interne (3) comportant une commande électronique de moteur (4), le convertisseur catalytique (2) pouvant être alimenté par un courant électrique (I) au moyen d'une régulation électronique (5) et d'un disjoncteur de puissance (20), et devant être porté à une température minimale nécessaire pour la conversion catalytique et/ou maintenu au-dessus de cette température, caractérisé en ce que

a) la température du convertisseur catalytique (2) est une grandeur de réglage d'au moins deux différents circuits de régulation ;
b) à l'état normal, la régulation est effectuée par au moins un circuit de régulation prioritaire ;
c) chacun des circuits de régulation se trouvant en fonctionnement de régulation est automatiquement surveillé en vue de la détection de perturbations ;
d) lors de la détection d'une perturbation, il est automatiquement commuté sur un autre circuit de régulation.

2. Procédé selon la revendication 1, caractérisé en ce que les circuits de régulation possèdent des structures différentes et/ou des complexités différentes.

3. Procédé selon l'une des revendications 1 ou 2, caractérisé en ce que la détection d'une perturbation donne lieu à un affichage de défaut ou à une mémorisation d'un message de défaut.

4. Procédé selon la revendication 1, caractérisé en ce que le circuit de régulation prioritaire comporte une sonde de température (23) en tant qu'indicateur de valeur réelle, qui est placée dans le convertisseur catalytique (2), et en ce que l'alimentation du convertisseur catalytique (2) en courant électrique (I) est effectuée en fonction de la température mesurée par la sonde de température (23).

5. Procédé selon l'une quelconque des revendications précédentes, caractérisé en ce que la température régnant dans le convertisseur catalytique (2) est une grandeur de réglage d'au moins deux des circuits de régulation ci-après, qui ont tous en commun, le convertisseur catalytique (2) en tant que section à réguler, le disjoncteur de puissance (20) en tant qu'élément de réglage, et la température régnant dans le convertisseur catalytique (2) en tant que grandeur de réglage :
a) un circuit de régulation avec une sonde de température (23) placée dans le convertisseur catalytique (2) en tant qu'indicateur de valeur réelle ;
b) un circuit de régulation, dans lequel la valeur réelle est déterminée à partir de données de la commande du moteur (4) au moyen d'un calcul de bilan thermique ;
c) un circuit de régulation, dans lequel la valeur réelle est déterminée à partir de valeurs mesurées par des indicateurs de mesure de température (12) extérieurs au convertisseur catalytique (2) ;
d) un circuit de régulation qui augmente la température du convertisseur catalytique (2) par prédétermination d'un temps de chauffage en fonction de valeurs de mesure d'une sonde de température extérieure (12) et/ou d'une sonde de température du moteur ;
e) un circuit de régulation qui augmente la température du convertisseur catalytique (2) par prédétermination d'un temps de chauffage fixe.

6. Procédé selon l'une quelconque des revendications précédentes, caractérisé en ce que deux ou plusieurs circuits de régulation fonctionnent simultanément, qui permettent une comparaison réciproque et/ou un contrôle réciproque de perturbations, une fonction de sécurité étant associée au circuit de régulation ayant la structure la plus simple et par conséquent la sensibilité aux perturbations la plus faible, par le fait que ce circuit de régulation met le courant électrique dans le circuit lorsqu'une mise dans le circuit n'est pas effectuée par d'autres circuits de régulation, et coupe le courant électrique lorsqu'une coupure n'est pas effectuée selon des critères prédéterminés par les autres circuits de régulation.

7. Procédé selon l'une quelconque des revendications précédentes, caractérisé en ce que l'un des circuits de régulation, en tant que circuit de régulation le plus simple, comporte une commande à temporisation pure qui met le courant électrique dans la circuit pendant un intervalle de temps pouvant être prédéterminé, ou qui coupe le courant après un intervalle de temps pouvant être prédéterminé.

8. Procédé selon l'une quelconque des revendications précédentes, caractérisé en ce que tous les circuits de régulation, et par conséquent le chauffage électrique du convertisseur catalytique (2), sont mis hors service lorsque certaines conditions pouvant être prédéterminées sont remplies, par exemple lorsque la tension électrique ou l'énergie disponibles tombent au-dessous d'une valeur minimale, ou lorsque la chute de tension au niveau du disjoncteur de puissance (20) se situe au-dessous d'une valeur minimale ou au-dessus d'une valeur maximale.

9. Procédé selon la revendication 8, caractérisé en ce que la mise hors service du chauffage électrique déclenche un message de défaut et/ou n'autorise plus qu'un régime limité de marche permettant d'atteindre un atelier.

10. Dispositif destiné à la mise en oeuvre du procédé selon la revendication 1, qui comporte un convertisseur catalytique (2) pouvant être chauffé électriquement avec un circuit de courant dimensionné pour une puissance électrique de l'ordre de 0,5 à 10 kW, qui comprend une source de courant (6), un disjoncteur de puissance (20), un convertisseur catalytique (2) pouvant être chauffé électriquement, et des lignes électriques (21, 22, 61, 62) , le convertisseur catalytique (2) étant disposé, en tant que partie d'un système d'épuration des gaz d'échappement, en aval d'un moteur a' combustion interne (3) comportant une commande électronique de moteur (4), caractérisé en ce que

a) le disjoncteur de puissance (20) est un élément de réglage commun et le convertisseur catalytique (2) une section de régulation commune à au moins deux circuits de régulation différents, dont la grandeur de réglage commune est la température régnant dans le convertisseur catalytique (2) ;

b) des systèmes électroniques de régulation (52, 53, 54), disposés dans un module électronique (5), font partie des différents circuits de régulation ;

c) le module électronique (5) comporte des moyens (51) destinés au contrôle des circuits de régulation (52, 53, 54) et au choix d'un circuit de régulation en état de fonctionnement.

11. Dispositif selon la revendication 10, caractérisé en ce qu'une sonde de température (23) placée dans le convertisseur catalytique (2) fait partie d'un premier circuit de régulation en tant qu'indicateur de valeur réelle, lequel est relié (24) au module électronique (5).

12. Dispositif selon l'une des revendications 10 ou 11, caractérisé en ce qu'un indicateur de valeur réelle fait partie d'un deuxième circuit de régulation, lequel détermine la valeur réelle à partir de données de la commande du moteur au moyen d'un calcul de bilan thermique.

13. Dispositif selon l'une quelconque des revendications précédentes, caractérisé en ce qu'il est prévu un circuit de régulation supplémentaire, qui augmente la température dans le convertisseur catalytique (2) grâce à une commande à temporisation (53) du courant électrique.

FIG 1

FIG 2

FIG 3

FIG 4

FIG 4A
FIG 4B

FIG 4A

EP 0 628 134 B1

FIG 4B

EP 0 628 134 B1